# EUROPEAN PATENT APPLICATION

(11) **EP 3 754 420 A1**
(43) Date of publication of application: **23.12.2020**
(21) Application number: 18863815.9
(22) Date of filing: 24.10.2018
(51) Int. Cl.: G02F 1/1337

(54) **COMPOSITE LIQUID CRYSTAL LAYER, PREPARATION METHOD THEREFOR, DISPLAY PANEL AND DISPLAY DEVICE**

(30) Priority: 13.02.2018 CN 201810150980
(71) Applicant: BOE Technology Group Co., Ltd., Beijing 100015 (CN); BEIJING BOE DISPLAY TECHNOLOGY CO., LTD., Beijing 100176 (CN)
(72) Inventor: Shao, Xibin, Beijing 100176 (CN); Zhan, Hongming, Beijing 100176 (CN); Wang, Feifei, Beijing 100176 (CN); Chen, Dongchuan, Beijing 100176 (CN)
(74) Representative: Gesthuysen, Michael
(86) International application number: PCT/CN2018/111551
(87) International publication number: WO 2019/157834

(57) **Abstract**

A composite liquid crystal layer, a method for fabricating the same, a display panel, and a display device are disclosed. The method comprises: coating a polymer liquid crystal composite system on a substrate, the polymer liquid crystal composite system comprising a photosensitive group containing self-assembling material, and a liquid crystal polymer material; photo-aligning the polymer liquid crystal composite system, so that the photosensitive group containing self-assembling material is formed into an oriented structure, and the liquid crystal polymer material is aligned under the action of the oriented structure; and curing the aligned liquid crystal polymer material, to form a polymer liquid crystal layer with a specified alignment structure. The polymer liquid crystal layer with a specified alignment structure is formed by photo-aligning and curing after coating is performed for one time, which simplifies the process and greatly improves production efficiency.

## Description

### RELATED APPLICATIONS

The present application claims the benefit of Chinese Patent Application No. 201810150980.1, filed on February 13, 2018, the entire disclosure of which is incorporated herein by reference.

### TECHNICAL FIELD

The present disclosure relates to the field of display technologies, and in particular, to a composite liquid crystal layer, a method for fabricating the same, a display panel, and a display device.

### BACKGROUND

At present, a polymer liquid crystal layer with a specified orientation direction is employed as a compensation layer in a display panel to compensate for light leakage in the display panel. A traditional process for fabricating the polymer liquid crystal layer with a specified orientation direction is relatively complicated, and the alignment layer and the liquid crystal polymer layer need to be fabricated separately.

### SUMMARY

Embodiments of the present disclosure provide a method for fabricating a composite liquid crystal layer, comprising:
coating a polymer liquid crystal composite system on a substrate, wherein the polymer liquid crystal composite system comprises a photosensitive group containing self-assembling material, and a liquid crystal polymer material;
photo-aligning the polymer liquid crystal composite system, so that the photosensitive group containing self-assembling material is formed into an oriented structure, and the liquid crystal polymer material is aligned under the action of the oriented structure; and
curing the aligned liquid crystal polymer material, to form a polymer liquid crystal layer with a specified alignment structure.

In a possible implementation, in the above-mentioned method in the embodiments of the present disclosure, curing the aligned liquid crystal polymer material comprises: thermocuring the aligned liquid crystal polymer material.

In a possible implementation, in the above-mentioned method in the embodiments of the present disclosure, curing the aligned liquid crystal polymer material comprises: photocuring the aligned liquid crystal polymer material.

In a possible implementation, in the above-mentioned method in embodiments of the present disclosure, a wavelength of light for photocuring the aligned liquid crystal polymer material is different from a wavelength of light for photo-aligning the polymer liquid crystal composite system.

In a possible implementation, in the above-mentioned method in embodiments of the present disclosure, the wavelength of light for photocuring the aligned liquid crystal polymer material is smaller than the wavelength of light for photo-aligning the polymer liquid crystal composite system.

In a possible implementation, in the above-mentioned method in embodiments of the present disclosure, the wavelength of light for photocuring the aligned liquid crystal polymer material is about 254 nm or 313 nm; and the wavelength of light for photo-aligning the polymer liquid crystal composite system is about 313 nm or 365 nm.

In a possible implementation, in the above-mentioned method in embodiments of the present disclosure, the method further comprises: prior to photo-aligning the polymer liquid crystal composite system, prebaking the polymer liquid crystal composite system to remove a solvent.

In a possible implementation, in the above-mentioned method in embodiments of the present disclosure, the method further comprises: prior to curing the aligned liquid crystal polymer material, prebaking the aligned liquid crystal polymer material to remove a solvent.

In a possible implementation, in the above-mentioned method in embodiments of the present disclosure, the method further comprises: after curing the aligned liquid crystal polymer material, postbaking the polymer liquid crystal layer with the specified alignment structure.

In a possible implementation, in the above-mentioned method in embodiments of the present disclosure, the photosensitive group containing self-assembling material is a photosensitive material, and the liquid crystal polymer material comprises a polymerizable monomer, a small molecule liquid crystal material, a chiral additive and a photoinitiator.

In a possible implementation, in the above-mentioned method in embodiments of the present disclosure, the polymer liquid crystal composite system comprises, by weight percentage, the photosensitive material 5∼40%, the polymerizable monomer 5∼55%, the small molecule liquid crystal material 0∼45%, the chiral additive 0∼20%, and the photoinitiator 0.001-1%.

In a possible implementation, in the above-mentioned method in embodiments of the present disclosure, the photosensitive material comprises one or more of a photodegradable sensitive group, a photoisomerizable sensitive group, and a photopolymerizable sensitive group.

In a possible implementation, in the above-mentioned method in embodiments of the present disclosure, during curing the aligned liquid crystal polymer material, the polymerizable monomer is polymerized, under the action of the chiral additive, in an oriented direction to form a polymer network, and the small molecule liquid crystal material reacts with the polymer network to form the polymer liquid crystal layer with the specified alignment structure.

In a possible implementation, in the above-mentioned method in embodiments of the present disclosure, the photoinitiator comprises one or more of a radical photoinitiator and a cationic photoinitiator.

In another aspect, embodiments of the present disclosure further provide a composite liquid crystal layer fabricated by the above-mentioned method, comprising: a polymer liquid crystal layer with a specified alignment structure.

In another aspect, embodiments of the present disclosure further provide a display panel comprising an array substrate and a counter substrate which are disposed oppositely, a liquid crystal layer between the counter substrate and the array substrate, and the above-mentioned composite liquid crystal layer between the counter substrate and the array substrate, wherein the composite liquid crystal layer functions as a phase compensation layer or a viewing angle compensation layer.

In another aspect, embodiments of the present disclosure further provide a display device comprising the above-mentioned display panel.

### BRIEF DESCRIPTION OF THE DRAWINGS

Fig. 1 is a schematic flow chart of a method for fabricating a polymer liquid crystal layer with a specified orientation direction in the related art;
Fig. 2 is a schematic flow chart of a method for fabricating a composite liquid crystal layer according to an embodiment of the present disclosure;
Figs. 3a-3c are schematic structural diagrams after each step in the method for fabricating the composite liquid crystal layer in embodiments of the present disclosure, respectively;
Fig. 4 is a schematic flow chart of another method for fabricating the composite liquid crystal layer in an embodiment of the present disclosure;
Fig. 5 is a schematic flow chart of another method for fabricating the composite liquid crystal layer in an embodiment of the present disclosure;
Fig. 6 is a schematic flow chart of another method for fabricating the composite liquid crystal layer in an embodiment of the present disclosure;
Fig. 7 is a schematic flow chart of another method for fabricating the composite liquid crystal layer in an embodiment of the present disclosure; and
Fig. 8 is a schematic flow chart of another method for fabricating the composite liquid crystal layer in an embodiment of the present disclosure.

### DETAILED DESCRIPTION OF EMBODIMENTS

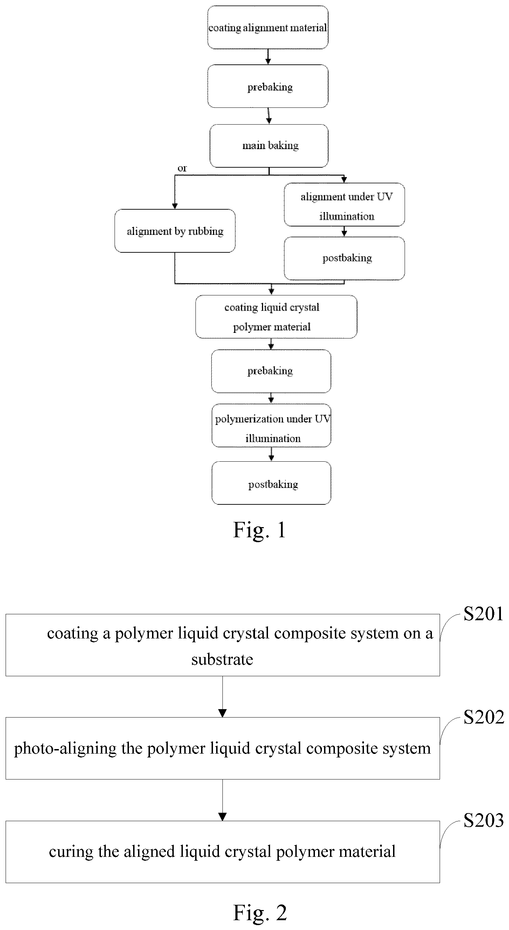

The traditional process for fabricating a polymer liquid crystal layer with a specified orientation direction is as follows:
As shown in Fig. 1, firstly, an alignment layer is formed on a substrate, which comprises coating, prebaking, main baking, rubbing alignment (or alignment under ultraviolet (UV) illumination, postbaking of an alignment material (such as polyimide, PI). Then, a polymer liquid crystal layer is formed, which comprises coating, prebaking, polymerization under UV illumination, and postbaking of a liquid crystal polymer (PLC) material.

It can be seen that the traditional process for fabricating a polymer liquid crystal layer with a specified orientation direction is relatively complicated. Steps for forming the alignment layer and steps for forming the liquid crystal polymer layer are performed separately, so that the efficiency is low.

In view of this, embodiments of the present disclosure provide a composite liquid crystal layer, a method for fabricating the same, a display panel, and a display device, in order to simplify the process for fabricating a polymer liquid crystal layer with a specified orientation direction. In order to make the purposes, technical solutions and advantages of the present disclosure more clearly, the present disclosure will be further described in detail below with reference to the drawings. Obviously, the described embodiments are merely some of the embodiments of the present disclosure rather than all the embodiments. Based on the embodiments of the present disclosure, all other embodiments obtained by a person of ordinary skill in the art without creative work are within the protection scope of the present disclosure.

Shapes and sizes of components in the drawings do not reflect the real scale, but to schematically illustrate the present disclosure.

A method for fabricating a composite liquid crystal layer in an embodiment of the present disclosure, as shown in Fig. 2, comprises the following steps:
S201, coating a polymer liquid crystal composite system on a substrate, wherein the polymer liquid crystal composite system comprises a photosensitive group containing self-assembling material, and a liquid crystal polymer material;
S202, photo-aligning the polymer liquid crystal composite system, so that the photosensitive group containing self-assembling material is formed into an oriented structure, and the liquid crystal polymer material is aligned under the action of the oriented structure; and
S203, curing the aligned liquid crystal polymer material, to form a polymer liquid crystal layer with a specified alignment structure.

Specifically, in the above-mentioned method in embodiments of the present disclosure, the process of separately preparing the alignment layer is omitted, and a photosensitive group containing self-assembling material is added to the liquid crystal polymer material to form a polymer liquid crystal composite system. The polymer liquid crystal composite system is directly coated on the substrate. Firstly, the polymer liquid crystal composite system is photo-aligned, so that the photosensitive group containing self-assembling material is formed into an oriented structure, and the liquid crystal polymer material is aligned under the action of the oriented structure. Then, the aligned liquid crystal polymer material is cured to form a polymer liquid crystal layer with a specified alignment structure. The polymer liquid crystal layer with a specified alignment structure is formed by photo-aligning and curing after coating is performed for one time, which simplifies the process and greatly improves production efficiency.

Optionally, in the above-mentioned method in embodiments of the present disclosure, at step S201, the polymer liquid crystal composite system is coated on the substrate. Specifically, the process of the display panel after which step S201 is performed may be selected, according to the position where the polymer liquid crystal layer with a specified alignment structure is required to be formed as a compensation layer. For example, if the composite liquid crystal layer to be formed is located between a spacer layer and a planarization layer of a counter substrate, the polymer liquid crystal composite system may be coated on the substrate on which the planarization layer has been formed, and subsequent steps S202 and S203 are performed.

Specifically, since the composite liquid crystal layer fabricated by the above-mentioned method in embodiments of the present disclosure is not oriented based on the alignment layer, it is not required to be formed on a relatively flat substrate to facilitate aligning of the alignment layer by rubbing. The composite liquid crystal layer fabricated by the above-mentioned method in embodiments of the present disclosure may also replace the planarization layer, and can be formed between the spacer layer and the color film layer of the counter substrate. That is, the composite liquid crystal layer is multiplexed as the planarization layer.

Specifically, the photosensitive group containing self-assembling material is a photosensitive material, and the liquid crystal polymer material comprises a polymerizable monomer, a small molecule liquid crystal material, a chiral additive, and a photoinitiator.

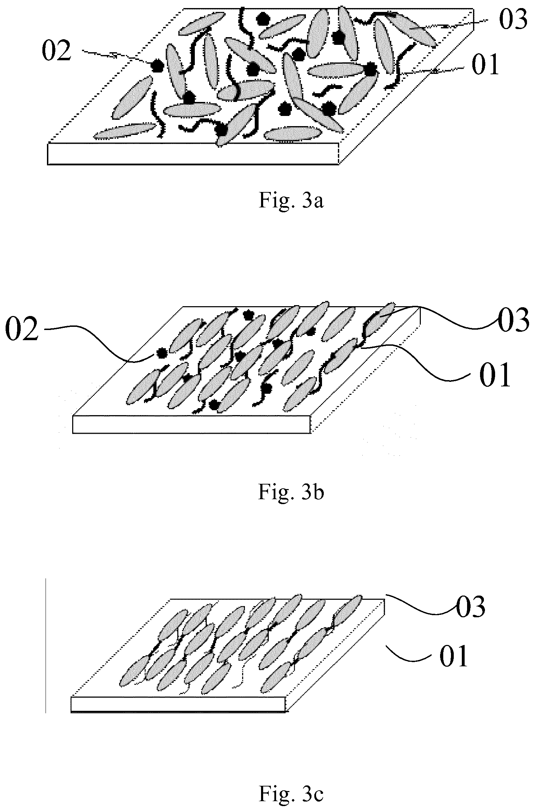

Optionally, in the above-mentioned method in embodiments of the present disclosure, as shown in Fig. 3a, the polymer liquid crystal composite system coated on the substrate at step S201 may comprise, by weight percentage, the photosensitive material 01 5∼40%, the polymerizable monomer 02 5∼55%, the small molecule liquid crystal material 03 0∼45%, the chiral additive (not shown) 0∼20%, and the photoinitiator (not shown) 0.001-1%.

The purpose of adding the small molecule liquid crystal material 03 is to adjust the liquid crystal related characteristics of the polymer liquid crystal composite system. When the polymerizable monomer 02 is a liquid crystal polymerizable monomer, the small molecule liquid crystal material 03 may be omitted, that is, a weight percentage of 0.

The purpose of adding the chiral additive 04 is to distort the liquid crystal material in a certain direction. When the polymerizable monomer 02 is a chiral liquid crystal polymerizable monomer, the chiral additive 04 may be omitted, that is, a weight percentage of 0.

Specifically, as shown in Fig. 3b, the photosensitive material 01 can be photoisomerized by a photoinitiator under particular illumination conditions, so that the photosensitive material 01 is molecularly fractured in a specific direction to form a network structure oriented in a direction. Under the intermolecular force, the polymerizable monomer 02 and the small molecule liquid crystal material 03 are completely aligned according to the oriented network structure. That is, the oriented alignment of the polymerizable monomer 02 and the small molecule liquid crystal material 03 is achieved.

Specifically, as shown in Fig. 3c, during curing the aligned liquid crystal polymer material, the polymerizable monomer 02 is polymerized in an oriented direction to form a polymer network under the action of the chiral additive, so that the small molecule liquid crystal material 03 is reacted with the polymer network to form a polymer liquid crystal layer with a specified alignment structure.

Optionally, in the above-mentioned method in embodiments of the present disclosure, the photosensitive material 01 may comprise one or more of a photodegradable sensitive group, a photoisomerizable sensitive group, and a photopolymerizable sensitive group. Specifically, the photosensitive material 01 may be selected from, but not limited to, the following materials: 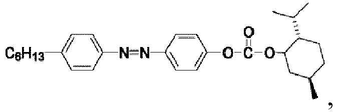 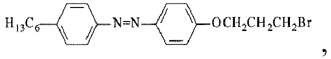 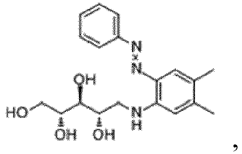 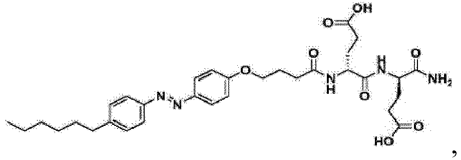 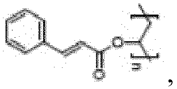 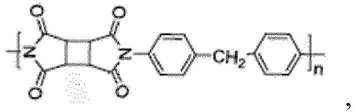 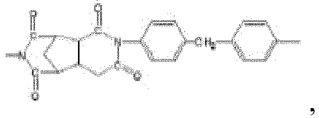 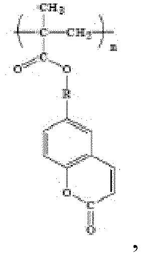 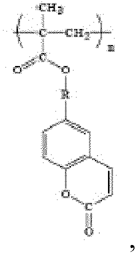 and

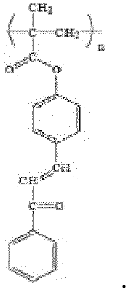

Optionally, in the above-mentioned method in embodiments of the present disclosure, the material of the polymerizable monomer 02 may be selected from, but not limited to, the following materials: 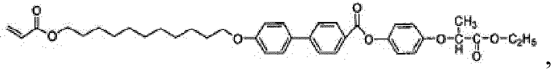 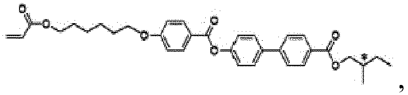 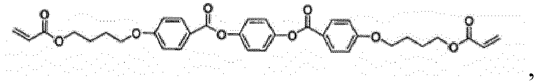 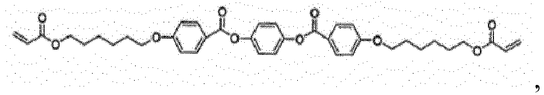 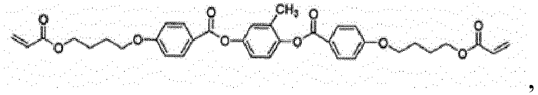 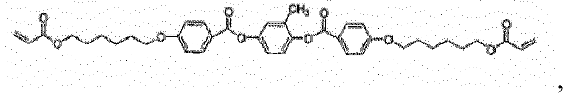 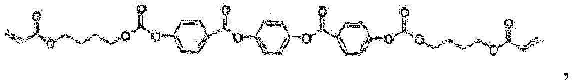 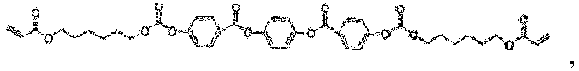 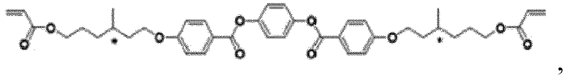
EGDE : 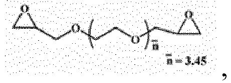
LA : 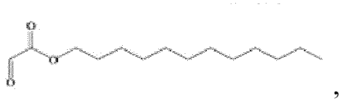 and
BDDA :

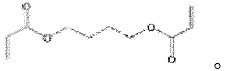

Optionally, in the above method in embodiments of the present disclosure, the small molecule liquid crystal material 03 may be selected from, but not limited to, the following materials:
MAT 1370, MAT 1284, SLC 1717.

Optionally, in the above method in embodiments of the present disclosure, the chiral additive may be selected from, but not limited to, the following materials: 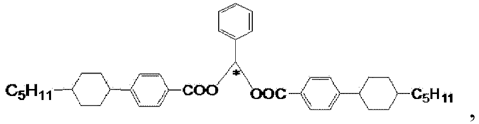 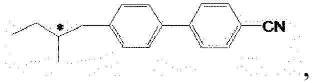 and

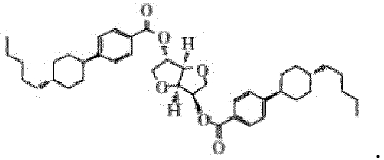

Optionally, in the above-mentioned method in embodiments of the present disclosure, the photoinitiator may comprise one or more of a radical photoinitiator and a cationic photoinitiator. Specifically, the photoinitiator may be selected from, but not limited to, the following materials:
IRG651 : 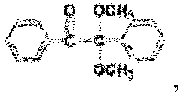
IRG184 : 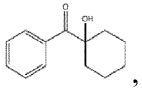
DAROCUR 1173 : 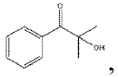
IRGACURE 127 : 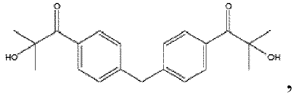 and
UVI-6976 :

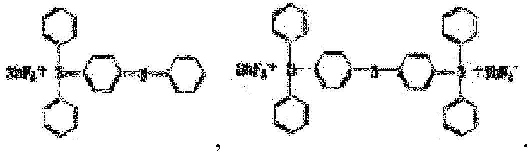

Optionally, in the above-mentioned method in embodiments of the present disclosure, during photo-aligning the polymer liquid crystal composite system at step S202, generally, light with a wavelength λ1 which can initiate the reaction of the photosensitive group is selected. Polarized light in the UV or near-UV range is generally used for illumination. For example, the wavelength λ1 may be about 365 nm, 313 nm, or 254 nm. Moreover, the energy density for the light with the wavelength λ1 is generally 0.1 J/cm² ∼ 1000 J/cm², which is specifically set according to the ratio of the photosensitive group. Moreover, generally, the lower the selected energy density, the longer the photo-alignment time is required, and the higher the selected energy density, the shorter the photo-alignment time is required. If the selected energy density is too high, the photo-aligned network structure may be damaged, resulting in the polymerizable monomer not being completely aligned according to the network structure, or the alignment direction is changed. If the selected energy density is too low, the formed network structure may be incomplete. Specifically, the energy density can be 1 J/cm² ∼ 3 J/cm², which depends on the general ratio of the photosensitive group.

Optionally, in the above-mentioned method in embodiments of the present disclosure, step S203 of curing the aligned liquid crystal polymer material specifically comprises:
thermocuring the aligned liquid crystal polymer material; or
photocuring the aligned liquid crystal polymer material.

Specifically, during curing the aligned liquid crystal polymer material by heating, the heating temperature may be selected according to the specific liquid crystal polymer material which is selected, and a suitable temperature is selected between 30 °C and 230 °C. Generally, the lower the temperature, the longer the curing time is required, and the higher the temperature, the shorter the curing time is required. If the heating temperature is too high, for example, higher than 230 °C, the oriented structure formed at step S202 may be damaged, resulting in a change in the alignment of the finished polymer liquid crystal layer, or incomplete alignment. If the heating temperature is too low, for example, lower than 30 °C, there may be a problem that the liquid crystal polymer material cannot be polymerized.

Specifically, during curing the aligned liquid crystal polymer material with light, generally, light with a wavelength λ2 which can induce polymerization of the liquid crystal polymer material is selected, and polarized light in the UV or near UV range is generally used for illumination. For example, the wavelength λ2 is about 365 nm, 313 nm or 254 nm. Moreover, the energy density of the light with the wavelength λ2 is generally 0.1 J/cm² ∼ 1000 J/cm², which depends on a thickness of the polymer liquid crystal layer required to be formed. Moreover, generally, the lower the selected energy density, the longer the curing time is required, and the higher the selected energy density, the shorter the curing time is required. If the selected energy density is too high, the oriented network structure formed at step S202 may be damaged, resulting in a change in the alignment of the finished polymer liquid crystal layer, or incomplete alignment. If the selected energy density is too low, there may be a problem that the liquid crystal polymer material cannot be polymerized. Specifically, depending on the general thickness range of the composite liquid crystal layer, the energy density can be 1 J/cm² ∼ 3 J/cm².

Optionally, in the above-mentioned method in embodiments of the present disclosure, the light with the wavelength λ2 for photocuring the aligned liquid crystal polymer material at step S203 is generally different from the light with the wavelength λ2 for photo-aligning the polymer liquid crystal composite system at step S202. This is because during photo-aligning, the excitation wavelength for photoisomerizing the photosensitive group is different from the excitation wavelength polymerizing the photosensitive group. In practice, it is necessary to appropriately select the light with the wavelength λ1 and the light with the wavelength λ2 according to the selected materials, such as the photosensitive material 01 and the polymerizable monomer 02.

Optionally, in the above-mentioned method in embodiments of the present disclosure, the wavelength λ2 of the light for photocuring of the aligned liquid crystal polymer material at step S203 is generally smaller than the wavelength λ2 of the light for photo-aligning the polymer liquid crystal composite system at step S202. This is because if the wavelength λ2 of the light for photocuring is larger than the wavelength λ1, the network structure of oriented alignment would be damaged, and the alignment of the finished polymer liquid crystal layer would be affected.

Optionally, in the above-mentioned method in embodiments of the present disclosure, the wavelength of light for photocuring the aligned liquid crystal polymer material at step S203 is about 254 nm or 313 nm. Correspondingly, the wavelength of light for photo-aligning the polymer liquid crystal composite system at step S202 is about 313 nm or 365 nm. Specifically, for example, in case polarized light of 313 nm is employed for illumination at step S202, correspondingly at step S203, polarized light of 254 nm is required for illumination. In case polarized light of 365 nm is employed for illumination at step S202, correspondingly at step S203, polarized light of 254 nm may be employed for illumination, or polarized light of 313nm may be employed for illumination.

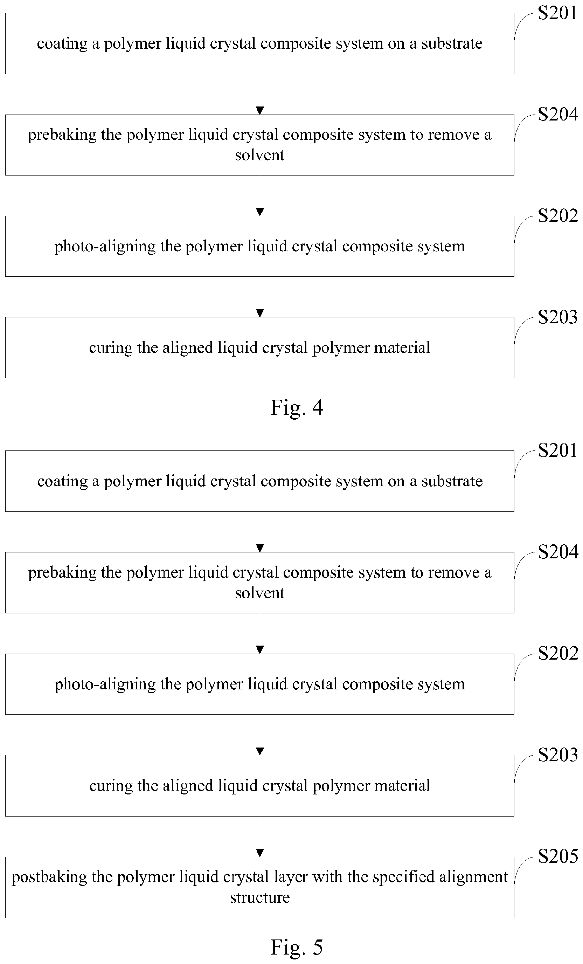

Optionally, in the above-mentioned method in embodiments of the present disclosure, as shown in Fig. 4 and Fig. 5, prior to photo-aligning the polymer liquid crystal composite system at step S202, the method may further comprise:
S204, prebaking the polymer liquid crystal composite system to remove a solvent.

Specifically, prebaking the polymer liquid crystal composite system can remove the solvent in the polymer liquid crystal composite system, which facilitates forming the oriented structure by photo-alignment at step S202. Specifically, prebaking can be performed by baking in an environment of 70-80 °C for about 80-100 seconds.

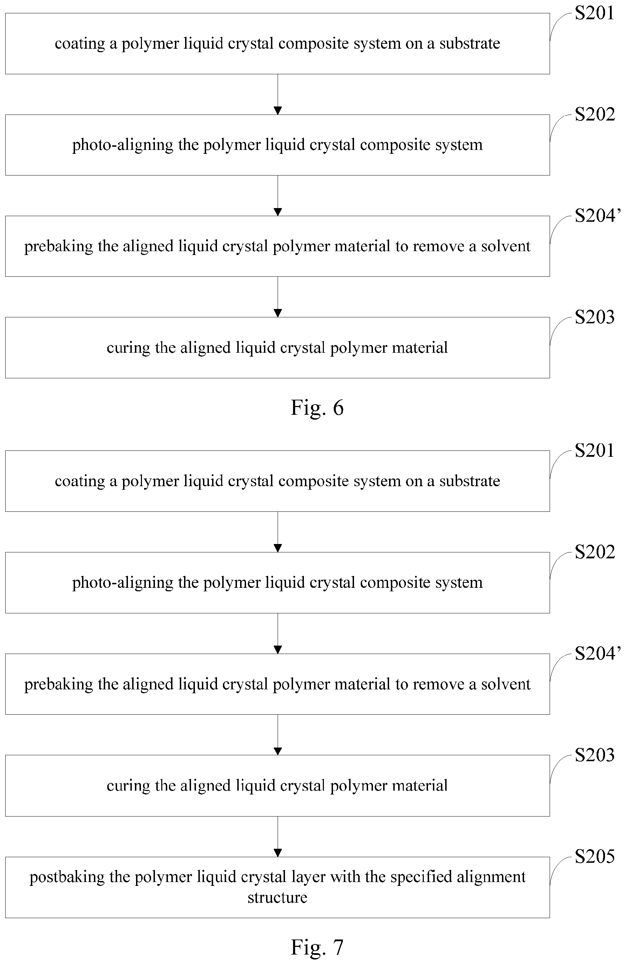

Optionally, in the above-mentioned method in embodiments of the present disclosure, as shown in Fig. 6 and Fig. 7, prior to curing the aligned liquid crystal polymer material at step S203, the method may further comprise:
S204', prebaking the aligned liquid crystal polymer material to remove a solvent.

Specifically, prebaking the aligned liquid crystal polymer material can remove the solvent in the polymer liquid crystal composite system, which facilitates forming a polymer liquid crystal layer with a specified alignment structure by curing at step S203. Specifically, prebaking can be performed by baking in an environment of 70 to 80 °C for about 80 to 100 seconds.

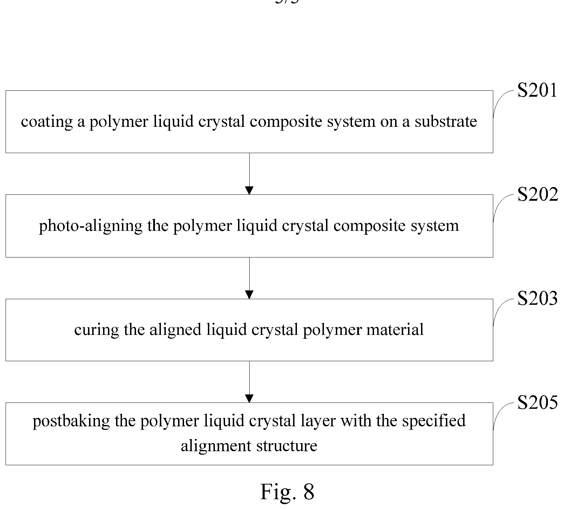

Optionally, in the above-mentioned method in embodiments of the present disclosure, as shown in Fig. 4 to Fig. 8, after curing the aligned liquid crystal polymer material at step S203, the method may further comprise:
S205, postbaking the polymer liquid crystal layer with the specified alignment structure.

Specifically, postbaking may be performed by baking in an environment of about 230 °C for about 20 to 30 minutes to remove remaining impurities in the polymer liquid crystal layer with a specified alignment structure, for example, the photoinitiator which is not completely reacted, the chiral additive, the solvent, etc. in the polymer liquid crystal composite system.

Based on a same inventive concept, embodiments of the present disclosure further provide a composite liquid crystal layer fabricated by the above-mentioned method in embodiments of the present disclosure, comprising: a polymer liquid crystal layer with a specified alignment structure. The polymer liquid crystal layer already has a specified orientation direction without the need of separately preparing an alignment layer, and can be applied to a display panel as a phase compensation layer or a viewing angle compensation layer, etc.

Based on a same inventive concept, embodiments of the present disclosure further provides a display panel comprising an array substrate and a counter substrate which are disposed oppositely, a liquid crystal layer between the counter substrate and the array substrate, and the above-mentioned composite liquid crystal layer between the counter substrate and the array substrate. The composite liquid crystal layer functions as a compensation layer.

Specifically, the composite liquid crystal layer may be located on a side of the counter substrate facing the array substrate. For example, the composite liquid crystal layer is located between a spacer layer and the planarization layer of the counter substrate.

Moreover, since the composite liquid crystal layer is not oriented based on the alignment layer, it is not required to be formed on a relatively flat substrate to facilitate aligning the alignment layer by rubbing. In this case, the composite liquid crystal layer may also replace the planarization layer, and be located between the spacer layer and the color film layer of the counter substrate, that is, the composite liquid crystal layer is multiplexed as the planarization layer.

Based on a same inventive concept, embodiments of the present disclosure further provide a display device, comprising the above-mentioned display panel in embodiments of the present disclosure, and the display device may be any product or part that has a display function, such as a mobile phone, a tablet computer, a television, a display, a notebook computer, a digital photo frame, a navigator. For the implementation of the display device, reference may be made to the embodiments of the above-mentioned display panel, and the repeated description is omitted.

In the above-mentioned composite liquid crystal layer, the method for fabricating the same, the display panel, and the display device in embodiments of the present disclosure, the process of separately preparing the alignment layer is omitted and a photosensitive group containing self-assembling material is added to the liquid crystal polymer material to form a polymer liquid crystal composite system. The polymer liquid crystal composite system is directly coated on the substrate. Firstly, the polymer liquid crystal composite system is photo-aligned, so that the photosensitive group containing self-assembling material is formed into an oriented structure, and the liquid crystal polymer material is aligned under the action of the oriented structure. Then, the aligned liquid crystal polymer material is cured to form a polymer liquid crystal layer with a specified alignment structure. The polymer liquid crystal layer with a specified alignment structure is formed by photo-aligning and curing after coating is performed for one time, which simplifies the process and greatly improves production efficiency.

It will be apparent to those skilled in the art that various modifications and variations can be made to the present disclosure without departing from the spirit and scope of the disclosure. Thus, if such modifications and variations of the present disclosure are within the scope of the appended claims of the present disclosure and their equivalents, it is intended that such modifications and variations are covered by the present invention.

## Claims

1. A method for fabricating a composite liquid crystal layer, comprising:
coating a polymer liquid crystal composite system on a substrate, wherein the polymer liquid crystal composite system comprises a photosensitive group containing self-assembling material, and a liquid crystal polymer material;
photo-aligning the polymer liquid crystal composite system, so that the photosensitive group containing self-assembling material is formed into an oriented structure, and the liquid crystal polymer material is aligned under the action of the oriented structure; and
curing the aligned liquid crystal polymer material, to form a polymer liquid crystal layer with a specified alignment structure.

2. The method according to claim 1, wherein curing the aligned liquid crystal polymer material comprises: thermocuring the aligned liquid crystal polymer material.

3. The method according to claim 1, wherein curing the aligned liquid crystal polymer material comprises: photocuring the aligned liquid crystal polymer material.

4. The method according to claim 3, wherein a wavelength of light for photocuring the aligned liquid crystal polymer material is different from a wavelength of light for photo-aligning the polymer liquid crystal composite system.

5. The method according to claim 4, wherein the wavelength of light for photocuring the aligned liquid crystal polymer material is smaller than the wavelength of light for photo-aligning the polymer liquid crystal composite system.

6. The method according to claim 5, wherein the wavelength of light for photocuring the aligned liquid crystal polymer material is about 254 nm or 313 nm; and the wavelength of light for photo-aligning the polymer liquid crystal composite system is about 313 nm or 365 nm.

7. The method according to any one of claims 1-6, further comprising: prior to photo-aligning the polymer liquid crystal composite system, prebaking the polymer liquid crystal composite system to remove a solvent.

8. The method according to any one of claims 1-6, further comprising: prior to curing the aligned liquid crystal polymer material, prebaking the aligned liquid crystal polymer material to remove a solvent.

9. The method according to any one of claims 1-6, further comprising: after curing the aligned liquid crystal polymer material, postbaking the polymer liquid crystal layer with the specified alignment structure.

10. The method according to any one of claims 1-6, wherein the photosensitive group containing self-assembling material is a photosensitive material, and the liquid crystal polymer material comprises a polymerizable monomer, a small molecule liquid crystal material, a chiral additive and a photoinitiator.

11. The method according to claim 10, wherein the polymer liquid crystal composite system comprises, by weight percentage, the photosensitive material 5∼40%, the polymerizable monomer 5∼55%, the small molecule liquid crystal material 0∼45%, the chiral additive 0∼20%, and the photoinitiator 0.001∼1%.

12. The method according to claim 11, wherein the photosensitive material comprises one or more of a photodegradable sensitive group, a photoisomerizable sensitive group, and a photopolymerizable sensitive group.

13. The method according to claim 11, wherein during curing the aligned liquid crystal polymer material, the polymerizable monomer is polymerized, under the action of the chiral additive, in an oriented direction to form a polymer network, and the small molecule liquid crystal material reacts with the polymer network to form the polymer liquid crystal layer with the specified alignment structure.

14. The method according to claim 11, wherein the photoinitiator comprises one or more of a radical photoinitiator and a cationic photoinitiator.

15. A composite liquid crystal layer, fabricated by the method according to any one of claims 1-14.

16. A display panel, comprising an array substrate and a counter substrate which are disposed oppositely, a liquid crystal layer between the counter substrate and the array substrate, and the composite liquid crystal layer of claim 15 between the counter substrate and the array substrate, wherein the composite liquid crystal layer functions as a phase compensation layer or a viewing angle compensation layer.

17. A display device, comprising the display panel of claim 16.
